# EUROPEAN PATENT SPECIFICATION

(11) **EP 2 271 562 B1**
(45) Date of publication and mention of the grant of the patent: **27.03.2013**
(21) Application number: 09735247.0
(22) Date of filing: 24.04.2009
(51) Int. Cl.: B65D 77/20, B32B 3/24, B32B 7/12, B32B 15/08, B32B 15/20, B32B 27/06, B32B 27/08, B32B 27/10, B32B 27/32, B32B 29/00, B32B 1/08

(54) **LID WITH BARRIER PROPERTY**
DECKEL MIT SPERREIGENSCHAFT
COUVERCLE À PROPRIÉTÉ DE BARRIÈRE

(30) Priority: 24.04.2008 JP 2008114566
(43) Date of publication of application: 12.01.2011
(73) Proprietor: Nestec S.A., 1800 Vevey (CH); Toppan Printing Co., Ltd., Taitoh-ku Tokyo 110-8560 (JP)
(72) Inventor: GOTOH, Masahi, Tokyo Taitoh-ku 110-8560 (JP); TERAYAMA, Takashi, Tokyo Taitoh-ku 1110-8560 (JP); SASAKI, Noriyuki, Tokyo Taitoh-ku 110-8560 (JP); SAITOH, Takeshi, Tokyo Taitoh-ku 110-8560 (JP); TAKEUCHI, Daiji, Tokyo Taitoh-ku 110-8560 (JP); NAITOH, Toyoaki, Tokyo Taitoh-ku 110-8560 (JP)
(74) Representative: Ducreux, Marie
(86) International application number: PCT/EP2009/054980
(87) International publication number: WO 2009/130313

(56) References cited:
- EP-A1- 2 008 553
- EP-A1- 2 277 793
- WO-A1-2009/130315
- FR-A- 2 834 695
- GB-A- 2 027 664
- US-A- 4 938 390

## Description

The invention relates to a lid to be adhered to the mouth of a paper cup, for example, and formed of a laminated structure of a metal foil and a plastic sheet. More specifically, the invention relates to a lid able to attach to and seal a paper cup, to maintain the barrier property, and to be easily opened by pressing and tearing.

Many lids to be opened by tearing, such as those opened by piercing them with a straw have been developed and commercialized. Furthermore, many proposals have been made to try to facilitate opening lids by perforations, breaking lines, or cutting lines. In general, lids for paper cups are designed to have a thick sealing layer in the innermost layer to cover steps so that they can seal the step on the flanges or the curls of paper cups when they are attached to the paper cups. For a paper cup, a rectangular paper is rolled into a cylinder or a paper shaped in a sector is rolled into an inverted circular truncated cone, and the opposite ends are superposed and the superposed portions are used as a joining part. If the opening has a flange or curl, a step is generated on the superposed portions, which is troublesome in maintaining airtightness. Hence, the resin layer in the lowermost layer of the lid is thickened to maintain the airtightness.

Furthermore, hot-melted layers are often used as the innermost layers in lids for paper cups, like in the following Japanese publications : Registered Utility Model Publication No. 3035303, Utility Model Application Publication No. 06-085295, Patent Application Publication No. 2002-104515, Patent Application Publication No. 09-110077, Patent Application Publication No. 06-001375, Patent Application Publication No. 06-320278, Utility Model Application Publication No. 07-017762.

However, an embodiment of the above-mentioned conventional lids that is to be pierced by a straw to be torn is not configured to open largely and may generate broken pieces of the lid to cause contingency such as accidental ingestion depending on a way of tearing the lid. In the case where the resin layer in the innermost layer is thick so as to cover a step at the flange or curl of a cup, it is quite difficult to tear and open the lid because of its thickness. Furthermore, if a hot-melted layer is used, there may be a problem in cleanness of hot melting (residues of hot-melting are generated). Furthermore, there are also problems that the hot-melted layer is melted to be accidentally opened if it is exposed to a high-temperature environment and that the smell peculiar to hot-melted layers degrades the value of products.

To solve these problems, it is an object of the invention to provide a lid with barrier property that is highly superior to the conventional products in barrier property, stable sealing property for cups, and ease of opening.

The invention concerns a lid with barrier property, comprising :
- a resin layer as an innermost layer, the resin layer including a polyethylene sealant layer,
- a metal foil layer being attached to the outside of the innermost layer via an adhesive layer,
the innermost layer being provided with a plurality of weakened portions extending radially from the center.

The weakened portions allows the innermost layer and also the metal foil layer to be torn, thereby facilitating opening the lid. The weakened portions can be either perforations or cutting lines. The number of the weakened portions is at least three and the weakened portions are circumferentially arranged to produce the same central angle around a central point.

According to a preferred embodiment, the innermost layer can comprise two inner layers :
- one of polyethylene sealant layer as a lowermost inner layer, and
- one of extruded polyethylene resin layer provided on the lowermost inner layer.

According to another preferred embodiment, the metal foil layer can comprise two inner layers :
- one of resin layer as a lowermost inner layer, and
- one of metal foil provided on said lowermost inner layer.

According to another preferred embodiment, the lid comprises an intermediate paper layer between the innermost layer and the metal foil layer.

Actually, to solve the technical problems mentioned above, the invention relates to a lid with barrier property, comprising a resin layer as an innermost layer, the resin layer including a polyethylene sealant layer, a metal foil layer being attached to the outside of the innermost resin layer via an adhesive layer, the innermost layer being provided with a plurality of weakened portions extending radially from the center, and the weakened portions allowing the innermost layer and also the metal foil layer to be torn, thereby facilitating opening the lid. The resin layer includes a polyethylene sealant layer. A metal foil layer is attached to the outside of the innermost resin layer via an adhesive layer. The innermost layer is provided with a plurality of weakened portions extending radially from the center. The weakened portions allow the innermost layer and also the metal foil layer to be torn, thereby facilitating opening the lid.

In the preferred embodiment, the innermost layer can comprise two inner layers of the polyethylene sealant layers :
- one of polyethylene sealant layer as a lowermost inner layer, and
- one of extruded polyethylene resin layer provided on the lowermost inner layer. A polyethylene terephthalate resin layer is generally provided on the extruded polyethylene resin layer as an adhesive. In this preferred embodiment, the outermost layer can comprise a metal foil such as an aluminum foil attached to the outside of the adhesive polyethylene terephthalate resin layer via a layer such as an extruded polyethylene resin layer.

The weakened portions can be either perforations or cutting lines. Preferably, a plurality of (preferably 3 to 8) weakened portions formed of perforations or cutting lines are provided in the innermost layer so as to extend radially from the center. The number of the weakened portions is at least three and the weakened portions are circumferentially arranged to produce the same central angle around a central point. These weakened portions pass through the sealant layer and the extruded polyethylene resin layer as an adhesive layer, and reach the polyethylene terephthalate resin layer. The weakened portions enable the innermost layer and also the metal foil to be torn, thereby facilitating opening the lid.

In this lid with barrier property, the metal foil of the outermost layer successfully secures barrier property. If an external force is applied to the weakened portions provided radially in the innermost layer to break them, the lid is easily divided and torn into sectors along the weakened portions from the center to the edge. Furthermore, because the innermost layer has the polyethylene sealant layer, if it is used for paper cups, it is possible to achieve airtightness by covering a step generated on the flange or curl of the cup. Further, because hot melting is not used, no melting occurs if the lid is exposed to a high-temperature environment, and there is no peculiar smell at all.

Thus, the invention has the advantageous effects as follows.

The lid with barrier property according to the invention is able to secure adequate airtightness by the outer metal foil layer, and is able to be pressed to be torn and to properly prevent broken pieces of the lid from being generated by the weakened portions such as perforations or cutting lines provided in the inner layer so as to extend radially from the center. Furthermore, because the innermost layer has the polyethylene sealant layer, it is possible to appropriately seal a cup to adequately secure airtightness regardless of the step on the flange or curl of the cup. Further, because hot melting is not used, it is possible to obtain stable sealing ability and to eliminate influence of smell.

### Brief description of the drawings

The characteristics and advantages of the invention will be better understood in relation to the figures which follow :
- Fig. 1 is a sectional view showing an embodiment of the inventive lid with barrier property taken along A - A line in Fig. 2,
- Fig. 2 is a bottom view showing the lid in Fig. 1,
- Fig. 3 is an overall exploded perspective view including an enlarged view showing an enlarged part of a container to which the lid with barrier property of Fig. 1 is applied,
- Fig. 4 is a sectional view showing an end of the container of Fig. 3 in its closed position,
- Fig. 5 is a perspective view illustrating the operation of the lid with barrier property of Fig. 1 and showing the relationship between the lid, container, and jar before contents are supplied to the jar,
- Fig. 6 is a sectional view illustrating the operation shown in Fig. 5 and showing the main part,
- Fig. 7 is a perspective view illustrating the operation of the lid with barrier property of Fig. 1 and showing the relationship between the lid, container, and jar during supplying contents to the jar,
- Fig. 8 is a sectional view illustrating the operation shown in Fig. 7 and showing the main part,
- Fig. 9 is a sectional view showing the second embodiment of the inventive lid with barrier property taken along A - A line in Fig. 10,
- Fig. 10 is a bottom view showing the lid corresponding to that of Fig. 9 having eight weakened portions.

### Detailed description of the drawings

In the present application, the terms "lower", "innermost", "outside", "upper" indicate the position of elements inside the lid in the context of the use of the lid to seal a container. It means then that the "lower" and "innermost" layers of the lid are placed nearer to the inside of the container whereas the "upper" and "outside" layers of the lid are placed nearer to the outside of the container.

Embodiments that apply the lid with barrier property according to the invention to a container 1 for instant coffee refill will now be explained in detail referring to the drawings. The invention is basically a lid with barrier property to be attached to a paper cup and is able to be applied to the overall embodiments that are opened by tearing the lid. Thus, the invention is not limited to the structures of the embodiments described below.

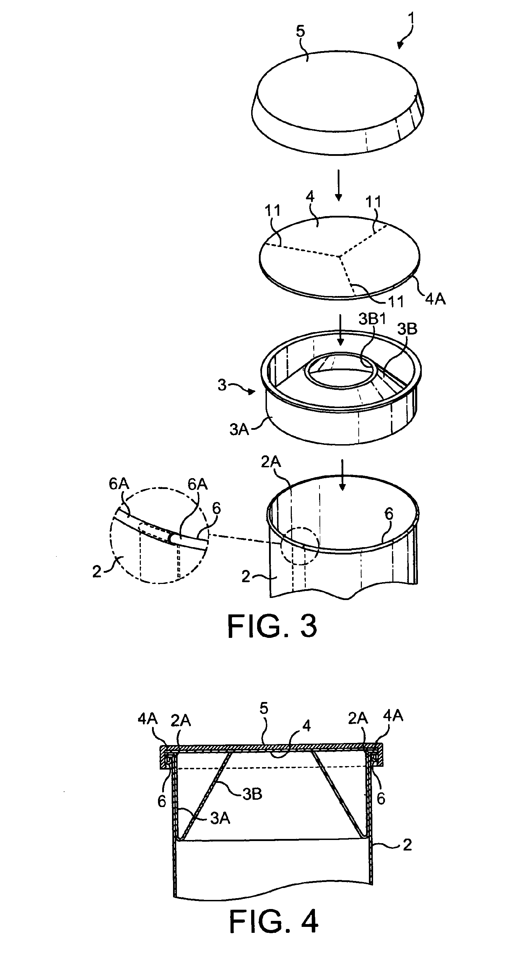

First, as shown in Figs. 3 and 4, the refill container 1 consists of a tubular container body 2, a hopper 3, a lid 4 with barrier property and a protection cap 5. The container body 2 is in a cylindrical shape with a bottom and made of a rectangular piece of paper. The paper cylinder is formed of a composite laminated sheet in which polyethylene, an aluminum foil, polyethylene terephthalate, and polyethylene are laminated sequentially and inwardly from the outermost layer of the cylinder. This is for fully blocking the moisture and the airflow. The polyethylene resin on the inner surface is provided for allowing adhesion to the lid 4. The art publicly known is used as means for processing. For example, a common technique such as lamination or coating is used. To produce the container body 2, a rectangular piece of paper with a surface processed as mentioned above is rolled into a cylinder, both the left and right ends are superposed, and the superposed portions are used as a joining part to achieve appropriate adhesion. As means for adhesion, any appropriate known art such as adhesion by an adhesive or thermal fusion bonding is used. On the upper end, as shown in Figs. 3 and 4, an annular curling portion (simply "curl portion" hereinafter) 6 curls outward and annularly. Consequently, a vertical step 6A is generated on the superposed portions on the upper surface of the curl portion 6. It is important to address the step 6A because the step 6A degrades the airtightness.

As shown in Fig. 3, a cylindrical hopper 3 is fitted into an opening portion 2A of the container body 2. The hopper 3 is made of the same material as that of the container body 2 or any appropriate resin material with a thickness of 0,8 mm such as high-density polyethylene (HDPE) or polypropylene. The hopper 3 has a straight, upright wall 3A extending circumferentially without an outward flange on its upper end. The upright wall 3A is fitted into the opening portion 2A of the container body 2 with the upper end of the wall 3A placed at the same height as that of the upper end of the opening portion 2A, that is, as the height of the upper end face of the curl portion 6.

The hopper 3 is fitted into the opening portion 2A and properly fixed to the inner circumferential surface of the opening portion 2A while precisely positioning the hopper upright wall 3A so that the upper end of the funnel 3B is placed at the same height as that of the upper ends of the upright wall 3A and the opening portion 2A of the container body 2, that is, so that the upper ends are placed in the same plane. Most preferable means such as thermal fusion bonding, radio frequency bonding, or use of adhesive is used as means for fixing.

The lid 4 with barrier property is adhered to the upper end of the hopper 3.

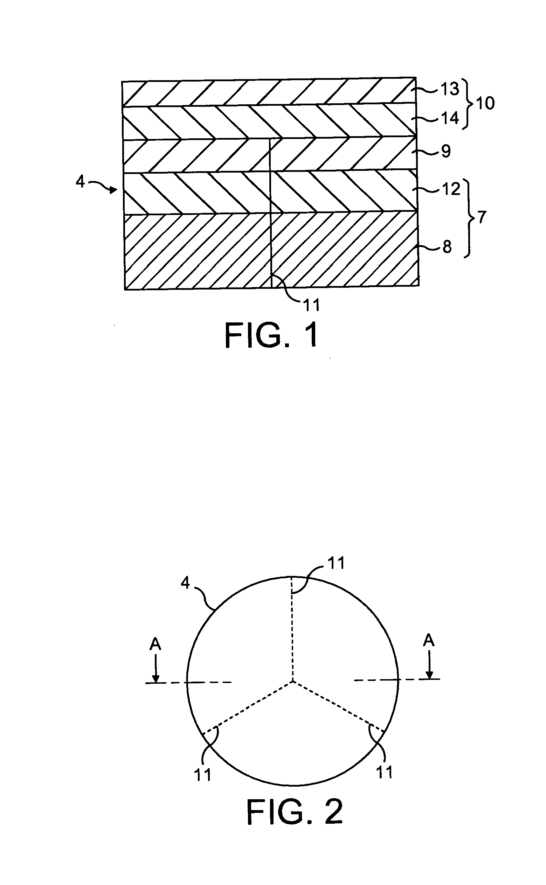

As shown in Fig. 1, the innermost layer 7 of the lid 4 with barrier property is a resin layer including a polyethylene sealant layer 8. A composite sheet in which a metal foil film 10 is attached to the outside of the resin layer of the innermost layer 7 via an adhesive layer 9 is used for the lid 4. Furthermore, the innermost layer 7 is provided with a plurality of weakened portions 11 extending radially from its center, thereby allowing the innermost layer 7 and also the metal foil film 10 to be easily torn so as to facilitate opening the lid.

The structure mentioned above will now be explained more specifically. The innermost layer 7 presents a lowermost layer which is a 40 µm sealant layer 8 of polyethylene (linear low-density polyethylene : LLDPE), and a 20 µm extruded resin film 12 of polyethylene (low-density polyethylene : LDPE) that is laminated on the upper surface of the polyethylene sealant layer 8. A 9 µm aluminum foil 13 is used in the metal foil layer 10, and a 15 µm extruded resin film 14 of polyethylene (low-density polyethylene : LDPE) is laminated on the bottom surface of the aluminum foil 13. The laminated resin layers 12 and 14 for the lowermost polyethylene sealant layer 8 and the aluminum foil 13 in the metal foil layer 10 are adhered to each other via an adhesive layer 9 to form a composite sheet. The art publicly known other than the above-mentioned art, which is a common method such as lamination and coating, may be used in processing this composite layer.

The thickness of the polyethylene sealant layer 8 is appropriately chosen in the preferable range of 30 - 200 µm, the thickness of the overlying polyethylene extruded resin film 12 in the range of 5 - 20 µm, and the thickness of the aluminum foil in the metal foil layer 10 in the range of 6 - 50 µm.

As shown in Figs. 3 and 4, the overall shape of the above-mentioned lid 4 is a circle with the same diameter as that of the opening portion 2A of the container body 2, for example" about 90 mm and its periphery 4A is properly attached to the upper end of the opening portion 2A of the container body 2, that is, the upper end surface of the curl portion 6. Typically, thermal fusion bonding is performed. Although the periphery 4A may be attached to the upper end face of the upright wall 3A of the hopper, the periphery 4A is merely in contact with the upper end of the funnel 3B of hopper 3, that is, the upper edge of opening 3B1.

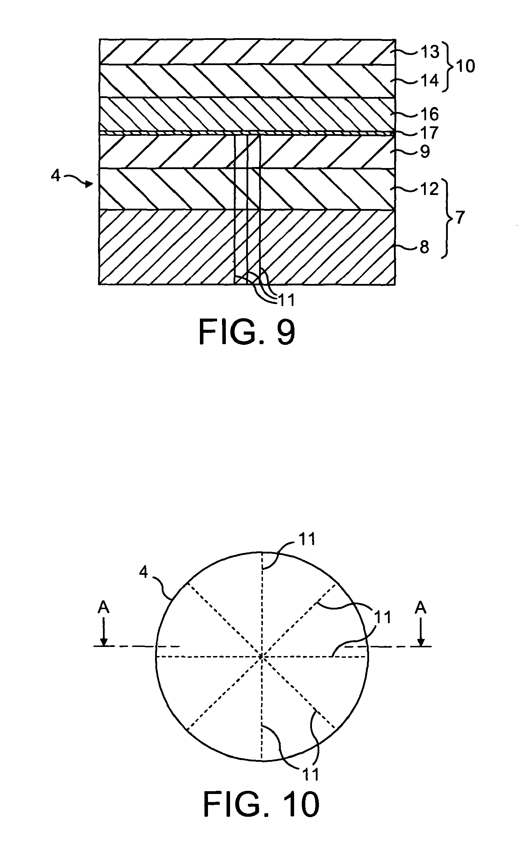

As shown in Figs. 1 and 2, the lid 4 with barrier property is further provided with perforations or cutting lines (perforations, in the shown example) as a plurality of weakened portions 11 extending radially from the center so that they reach the innermost layer 7 and the adhesive layer 9 of polyethylene terephthalate. The perforations or cutting lines as the weakened portions 11 enable the innermost layer 7 and also the metal foil layer 10 to be easily torn, thereby facilitating opening the lid. As shown in Fig. 2, the perforations or cutting lines are three straight lines crossing at the center, and the length of the line is 9 mm and the length of the connection is 1 mm. The number of the lines which is 3 is the minimum number to achieve the given object of the invention. Although the maximum of the number of the lines depends on the size of the lid 4, the desirable maximum is 10. If the number is 10 or more, the strength of the lid 4 may be weakened, which is not preferable. The number is ideally 3 to 8 (an example with 8 lines is shown in Fig. 10).

The protection cap 5 is made of the same material as that of the container body 2 or an appropriate resin with a thickness of about 0,8 mm such as high-density polyethylene (HDPE) or polypropylene. The cap 5 fits externally with the opening portion 2A of the container body 2 to protect the lid 4 and also keep the interior sanitary.

In general, an operation of supplying powdery instant coffee P to the inside of the refill container 1 is performed through the opening 3B1 of the hopper.

The usage of the first embodiment constructed as previously mentioned will now be explained.

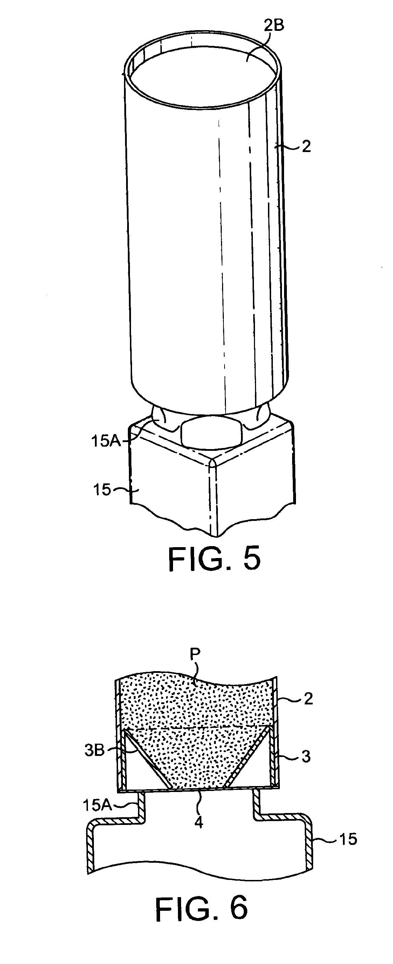

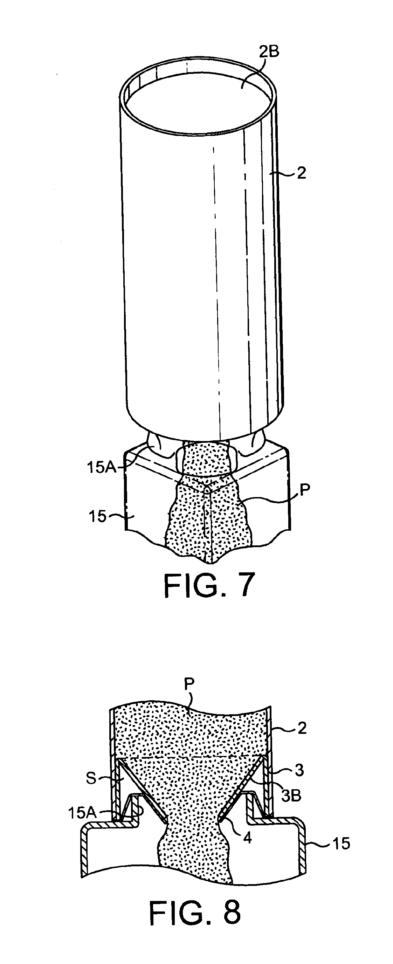

First, the protection cap 5 is removed, then, as shown in Figs. 5 and 6, the container body 2 is inverted and placed at a position where the hopper 3 internally fits with the cylindrical mouth 15A of a jar 15 which is an example the refillable container. The instant coffee P in the container body 2 flows down into the hopper 3, but it is retained by the lid 4. Thereafter, as shown in Figs. 7 and 8, a pressing force is applied against the container body 2 so as to push the funnel 3B toward the mouth 15A of jar 15. This pressing force acts as a force allowing the mouth 15A of jar 15, which is, in general, a tubular portion cylindrically, upwardly extending from the body, to press and tear the lid 4. That is, it acts as a force allowing the mouth 15A of jar 15 to push the lid 4 upward and force the lid 4 into a space S with a triangular section defined between the upright wall 3A and the funnel 3B of hopper 3. Because the perforations which are the weakened portions 11 are provided radially, the lid 4 to which the pressing force is applied is very easily torn and divided into a plurality of division pieces along the perforations. At the same time, the funnel 3B enters the mouth 15A of jar 15. Consequently, the opening 3B1 of funnel 3B of hopper 3 is opened and the instant coffee P in the container body 2 flows down into the jar 15 at a stretch while it is guided to the center by the funnel 3B of hopper 3. The refill container 1 is discarded after the refilling of the jar 15 is finished. In the figures, 2B indicates the bottom of the container body 2.

Thus, the funnel 3B fitting internally with the mouth 15A of jar 15 guides the instant coffee P down into the jar 15 without spilling it outside of the jar 15. The funnel 3B allows the instant coffee P not to be exposed to the air unnecessarily, thereby preventing the aroma and the flavor from deteriorating as much as possible.

In the tests of the performance of the produced lid, its central portion was successfully torn. The pressing force was no greater than 100 N. In the test of checking the behavior of penetrant at the step 6A of the opening portion 2A in a paper cup, no leakage was observed. Furthermore, removal of the lid from the opening portion 2A of the paper cup was not observed during high-temperature preservation. The barrier property of the overall lid was equivalent to that of aluminum lids and a preferable result was obtained. In contrast to hot-melted lids, any bad smell was not generated.

Thus, because the innermost layer of the lid 4 has a sealant layer 8 of polyethylene (linear low-density polyethylene : LLDPE), the lid 4 is able to appropriately seal the opening portion of a paper cup to adequately secure the airtightness even if the opening portion is directly sealed by the lid 4 regardless of the presence of the step 6A on the mouth that is peculiar to paper cups. Furthermore, it is possible to achieve stable sealing and remove bad smells because hot melting is not used.

An alternative structure of the inventive lid with barrier property will now be explained referring to Fig. 9. This alternative structure has the same effect as that of the first embodiment and furthermore has a structure in which opening the lid is simpler and weakened portions can be produced more easily. The same reference numerals will be used for the same structures as that of the first embodiment and detailed explanations for such structures will be omitted.

The second embodiment is characterized in that the lid 4 further comprises a paper layer 16 between the innermost layer 7 and the metal foil layer 10 as an intermediate layer.

The paper layer 16 is attached to the extruded resin film 14 of polyethylene (low-density polyethylene : LDPE) laminated on the lower surface of the aluminum foil 13. For the paper layer 16, quality paper with a basis weight of 40 g/m² is used. The bottom surface of the quality paper of the paper layer 16 and the extruded resin film 12 of polyethylene (low-density polyethylene : LDPE) in the innermost layer 7 are adhered together by an adhesive 17 to form a composite sheet. A two-liquid curing type ester-urethane adhesive for dry lamination can be used as an adhesive 17. The quality paper for the paper layer 16 is appropriately chosen from those with a basis weight in a preferable range of 15 - 150 g/m². The perforations or cutting lines as the weakened portions 11 are formed so as to fully reach the top surface of the paper layer 16. Layers 8 and 9 present the same composition as mentioned above.

Because of the paper layer 16 is interposed, the paper layer 16 acts as a mount and, when the perforations or cutting lines which are weakened portions 11 are formed in the innermost layer 7, the penetrating process is more stable and it is possible to form the weakened portions 11 more precisely in comparison with the structure having resin layers and metal foil layers only. Furthermore, when the lid 4 is pressed to be torn via the weakened portions 11, a breaking sound is generated from the paper layer 16, thereby generating a good feeling of opening.

An outward flange that hermetically abuts the opening edge of the container body 2 may be provided on the upper end of the upright wall 3A. The same effect can be obtained without degrading the merits of the lid 4 in the first and second embodiments, such as the ability of opening, high-temperature preservation property, barrier property, smell, stable processibility of the weakened portions 11.

In the above embodiments, the contents are instant powdery coffee ; however, alternatively, it is possible to apply the invention to other food or non-food powdery material, such as water-soluble milk (powdery milk), cocoa powder, tea powder, or combination of these powders. Other examples are dried mashed potatoes or other dried foods, sauce or gravy powder, soup powder, and also toner for copy machines.

Instead of the jar 15, it is possible to apply the invention to coffee powder tanks of coffer maker apparatus or refill containers for toner for copy machines.

### Description of reference numerals :

- 1: refill container
- 2: container body
- 2A: opening portion
- 3: hopper
- 4: lid
- 5: protection cap
- 6: curl
- 6A: step
- 7: innermost layer
- 8: lowermost sealant layer
- 9: adhesive layer
- 10: metal foil layer
- 11: weakened portion
- 12, 14: extruded resin film
- 13: aluminum foil
- 15: jar
- 16: paper layer

## Claims

1. A lid with barrier property, comprising :
- a resin layer as an innermost layer (7), the resin layer including a polyethylene sealant layer (8),
- a metal foil layer (10) being attached to the outside of the innermost layer (7) via an adhesive layer (9),
the innermost layer (7) being provided with a plurality of weakened portions (11) extending radially from the center, wherein the number of the weakened portions (11) is at least three and the weakened portions are circumferentially arranged to produce the same central angle around a central point.

2. The lid with barrier property according to claim 1, wherein the weakened portions (11) are either perforations or cutting lines.

3. The lid with barrier property according to any of claims 1 or 2 wherein :
- the innermost layer (7) comprises two inner layers : one of polyethylene sealant layer (8) as a lowermost inner layer and one of extruded polyethylene resin layer (12) provided on the lowermost inner layer (8) and
- a polyethylene terephthalate resin layer (9) is provided on the extruded polyethylene resin layer (12) as an adhesive, and
- the metal foil layer (10) comprises a metal foil (13) attached to the outside of the adhesive polyethylene terephthalate resin layer (9) via a layer of an extruded polyethylene resin layer (14).

4. The lid with barrier property according to claim 3, wherein it comprises an intermediate paper layer (16) between the innermost layer (7) and the metal foil layer (10).

## Patentansprüche

1. Deckel mit Sperreigenschalt, der folgendes aufweist:
- eine Harzschicht als innerste Schicht (7), wobei die Harzschicht eine Abdichtungsschicht aus Polyethylen (8) besitzt,
- eine Schicht aus Metallfolie (10), die über eine Klebeschicht (9) außen an der innersten Schicht (7) befestigt ist,
wobei die innerste Schicht (7) eine Vielzahl von Sollbruchstellen (11) aufweist, die sich radial von der Mitte her erstrecken, wobei die Anzahl der Sollbruchstellen (11) mindestens drei ist, und die Sollbruchstellen am Umfang angeordnet sind, so dass sie denselben Mittelpunktwinkel um einen Mittelpunkt herum bilden.

2. Deckel mit Sperreigenschaft nach Anspruch 1, wobei es sich bei den Sollbruchstellen (11) entweder um Perforierungen oder um Schnittlinien handelt.

3. Deckel mit Sperreigenschaft nach einem der Ansprüche 1 oder 2, wobei:
- die innerste Schicht (7) zwei Innenschichten aufweist: eine Abdichtungsschicht aus Polyethylen (8) als unterste Innenschicht und eine extrudierte Polyethylenharzschicht (12), die auf der untersten Innenschicht (8) angeordnet ist, und
- eine Polyethylenterephtalatharzschicht (9) als Haftmittel auf der extrudierten Polyethylenharzschicht (12) angeordnet ist, und
- die Schicht aus Metallfolie (10) eine Metallfolie (13) aufweist, die über eine Schicht einer extrudierten Polyethylenharzschicht (14) an der Außenseite der anhaftenden Polyethylenterephtalatharzschicht (9) befestigt ist.

4. Deckel mit Sperreigenschaft nach Anspruch 3, wobei er eine Papierzwischenschicht (16) zwischen der innersten Schicht (7) und der Schicht aus Metallfolie (10) aufweist.

## Revendications

1. Couvercle à propriété de barrière comportant:
- une couche de résine en tant que couche la plus interne (7), la couche de résine comportant une couche d'étanchéité de polyéthylène (8),
- une couche de feuille métallique (10) étant attaché à l'extérieur de la couche la plus interne (7) à travers une couche adhésive (9),
la couche la plus interne (7) présentant une pluralité de portions faibles (11) s'étendant radialement à partir du centre, le nombre de portions faibles (11) étant au moins trois et les portions faibles étant agencé d'une manière circonférentielle pour produire le même angle central autour d'un point central.

2. Couvercle à propriété de barrière selon la revendication 1, les portions faibles (11) étant ou bien des perforations ou bien des lignes de coupe.

3. Couvercle à propriété de barrière selon l'une quelconque des revendications 1 ou 2,
- la couche la plus interne (7) comportant deux couches internes: une couche d'étanchéité de polyéthylène (8) en tant que couche interne la plus basse et une couche extrudée de résine de polyéthylène (12) prévue sur la couche interne la plus basse (8), et
- une couche de résine de polyéthylène téréphtalate (9) étant prévue sur la couche extrudée de résine de polyéthylène (12) en tant qu'adhésif, et
- la couche de feuille métallique (10) présentant une feuille métallique (13) attachée à l'extérieur de la couche de résine de polyéthylène téréphtalate (9) adhésive à travers une couche extrudée de résine de polyéthylène (14).

4. Couvercle à propriété de barrière selon la revendication 3, comportant une couche intermédiaire de papier (16) entre la couche la plus interne (7) et la couche de feuille métallique (10).
